# EUROPÄISCHE PATENTSCHRIFT

(11) **EP 2 125 447 B1**
(45) Veröffentlichungstag und Bekanntmachung des Hinweises auf die Patenterteilung: **21.07.2010**
(21) Anmeldenummer: 08734624.3
(22) Anmeldetag: 14.03.2008
(51) Int. Cl.: B60R 21/237

(54) **GEFALTETER GASSACK FÜR EIN KRAFTFAHRZEUG**
FOLDED AIRBAG FOR A MOTOR VEHICLE
AIRBAG PLIÉ POUR UNE AUTOMOBILE

(30) Priorität: 14.03.2007 DE 102007013101
(43) Veröffentlichungstag der Anmeldung: 02.12.2009
(73) Patentinhaber: Takata-Petri AG, 63743 Aschaffenburg (DE)
(72) Erfinder: FELLER, Jens, 89171 Illerkirchberg (DE)
(74) Vertreter: Baumgärtel, Gunnar
(86) Internationale Anmeldenummer: PCT/EP2008/002083
(87) Internationale Veröffentlichungsnummer: WO 2008/110382

(56) Entgegenhaltungen:
- EP-A- 0 940 301
- DE-A1-102005 015 519
- US-A- 5 899 490
- US-A- 6 110 094
- US-A1- 2003 155 759
- US-A1- 2005 070 414
- US-B1- 6 279 944
- US-B1- 6 371 518

## Beschreibung

Die Erfindung betrifft einen gefalteten Gassack für ein Airbagmodul zum Einbau in ein Kraftfahrzeug, der in einem Crash-Fall - zum Schutz eines Kraftfahrzeuginsassen oder, je nach Einbaulage, einer außerhalb des Kraftfahrzeugs befindlichen Person - aufblasbar ist, nach dem Oberbegriff des Anspruchs 1.

Ein derartiger Gassack umfasst eine erste Rollfaltung, die durch Aufrollen eines ersten Gassackabschnittes erzeugt ist, sowie eine zweite Rollfaltung, die durch Aufrollen eines zweiten Gassackabschnittes erzeugt ist.

Der Gassack wird im gefalteten Zustand in ein Airbagmodul integriert, das in ein Kraftfahrzeug einzubauen ist und das eine Aufblaseinrichtung, z. B. in Form eines Gasgenerators aufweist, mit der der Gassack in einem Crash-Fall mit Gas befüllbar ist, so dass er sich entfaltet und im aufgeblasenen Zustand eine Rückhaltevorrichtung in Form eines Gaskissens für die zu schützende Person bildet. Das Aufblasen des Gassackes in einem Crash-Fall soll dabei sowohl solche Fälle umfassen, in denen der Gassack erst bei Auftreten einer Fahrzeugkollision, detektiert beispielsweise durch einen Beschleunigungssensor, mittels des Gasgenerators aufgeblasen wird, als auch solche Fälle, in denen der Gasgenerator bereits bei Detektion einer bevorstehenden Kollision, z. B. mittels eines so genannten Pre-Crash-Sensors, aktiviert wird und den Gassack mit Gas befüllt.

Gassäcke dieser Art, die im zusammengefalteten Zustand zumindest abschnittsweise eine Rollfaltung aufweisen, sind z. B. aus der EP 0 940 301 A1, der US-A 5,899,490, der US-A 6,110,094, der US 6,279,944 B1 sowie der US 6,371,518 B1 bekannt, wobei speziell in der gattungsgemäßen US-A 5,899,490 ein Gassack mit zwei parallel zueinander erstreckten Rollfaltungen beschrieben ist.

Der Erfindung liegt das Problem zugrunde, einen Gassack der eingangs genannten Art, insbesondere im Hinblick auf eine gezielte Entfaltung weiter zu verbessern.

Dieses Problem wird erfindungsgemäß durch die Schaffung eines gefalteten Gassackes mit den Merkmalen des Anspruchs 1 gelöst.

Danach sind die Raumrichtungen (Rollrichtungen), entlang derer die beiden Gassackabschnitte des erfindungsgemäßen Gassackes zur Bildung je einer Rollfaltung aufgerollt sind, winklig zueinander orientiert, erstrecken sich also in einem endlichen Winkel, jedoch nicht entgegengesetzt zueinander, insbesondere so, dass zwei Geraden, die entlang je einer der beiden Raumrichtungen verlaufen, einander schneiden.

Durch die winklige Orientierung der Raumrichtungen, entlang derer die beiden Rollfaltungen durch Aufrollen je eines Gassackabschnittes gebildet sind, verlaufen auch die beiden resultierenden Rollfaltungen winklig zueinander.

Bei geeigneter Wahl der Raumrichtungen bzw. des hieraus resultierenden Winkels, der die winklige Lage der beiden sich ergebenden Rollfaltungen zueinander angibt, lassen sich die Entfaltungsrichtung des Gassackes sowie die Geschwindigkeit der Entfaltung gezielt einstellen.

Eine derartige Gassackfaltung lässt sich grundsätzlich bei allen Gassacktypen einsetzen, also z. B. bei Gassäcken für Seiten- und Kopfairbagmodule, unabhängig davon, ob diese sitz- oder türintegriert sind, für Frontairbagmodule, Knieairbagmodule usw. Der Winkel zwischen den Raumrichtungen, entlang derer die beiden Gassackabschnitte zur Bildung je einer Rollfaltung aufgerollt werden, liegt z. B. zwischen 10° und 170°, insbesondere zwischen 30° und 150° bzw. enger gefasst zwischen 45° und 135° oder zwischen 75° und 105°. Es kann also insbesondere auch ein Winkel in der Gegend von 90° (senkrechte Orientierung der beiden Raumrichtungen, entlang derer aufgerollt wird) vorgesehen sein.

Gemäß einer Ausführungsform der Erfindung überlappen die beiden Rollfaltungen einander, so dass in dem zweiten Abschnitt des Gassackes, durch dessen Aufrollen die zweite Rollfaltung erzeugt wird, zumindest ein Teil der ersten Rollfaltung liegt und beim Aufrollen des zweiten Gassackabschnittes zur Bildung der zweiten Rollfaltung zumindest ein Teil der ersten Rollfaltung entlang der zweiten Raumrichtung mit aufgerollt wird.

Hierbei kann einerseits vorgesehen sein, dass die aus den beiden Rollfaltungen resultierende Faltung einen ersten Faltbereich aufweist, in dem die beiden Rollfaltungen einander überlappen, sowie mindestens einen weiteren Faltbereich, der durch eine der beiden Rollfaltungen ohne Überlapp gebildet wird, wobei insbesondere auch zwei weitere Faltbereiche vorgesehen sein können, die durch jeweils eine der beiden Rollfaltungen (ohne Überlapp) gebildet werden.

Andererseits kann vorgesehen sein, dass die beiden Rollfaltungen vollständig überlappen, so dass mindestens eine der beiden Rollfaltungen keinen Bereich aufweist, der nicht mit der anderen Rollfaltung überlappt, wobei insbesondere auch vorgesehen sein kann, dass keine der beiden Rollfaltungen einen Bereich aufweist, der nicht mit der anderen Rollfaltung überlappt.

Bei Bedarf kann der gefaltete Gassack auch mehr als zwei Rollfaltungen aufweisen, vor denen mindestens zwei entlang unterschiedlicher Raumrichtungen aufgerollt sind.

Gemäß einer konkreten Ausführungsform dieser Erfindungsvariante sind drei Rollfaltungen vorgesehen, von denen die eine Rollfaltung die beiden anderen Rollfaltungen überlappt, wobei letztere entweder entlang zueinander winkliger Raumrichtungen aufgerollt worden sind oder entlang zueinander paralleler bzw. entgegengesetzter Raumrichtungen aufgerollt worden sind.

Dabei kann weiterhin vorgesehen sein, dass die eine (dritte) Rollfaltung durch das Aufrollen zweier Gassackbereiche gebildet wird, in denen zuvor jeweils eine Rollfaltung erzeugt worden ist, wobei insbesondere nacheinander zunächst ein eine erste Rollfaltung aufweisender Gassackbereich und anschließend ein anderer, eine zweite Rollfaltung aufweisende Gassackbereich aufgerollt werden. Hierbei kann gemäß einer Variante die Rollrichtung, entlang der der Gassack zur Bildung der dritten Rollfaltung aufgerollt wird, im Wesentlichen entlang der Erstreckungsrichtung der beiden ersten Rollfaltungen verlaufen.

Die aus den einzelnen Rollfaltungen resultierende Faltung weist nach einer Ausführungsform mindestens zwei zueinander abgewinkelte Faltabschnitte auf. Gemäß einer Weiterbildung dieser Ausbildungsform ist ein (zentraler) Faltabschnitt der resultierenden Faltung vorgesehen, von dem zwei weitere Faltabschnitte abgewinkelt sind.

Zur Bildung einer Rollfaltung kann dabei vorgesehen sein, dass der entsprechende Gassackabschnitt (entlang einer definierten Rollrichtung und um eine definierte Rollachse) mindestens dreimal, insbesondere mindestens fünfmal, aufgerollt wird, wobei jedes einzelne Aufrollen zur Bildung eines im Querschnitt annähernd ringförmigen Bereiches des jeweiligen Gassackabschnittes führt, der 360° umschließt und der im Querschnitt einen Teil einer Spirale bildet.

Weiterhin kann vor, während und nach dem Bilden der einzelnen Rollfaltungen vorgesehen sein, in dem Gassack eine Einstülpung zu formen oder den Gassack mindestens einmal umzuschlagen.

Bei dem Gassack, der mit den mindestens zwei Rollfaltungen versehen ist, kann es sich z. B. um einen im flach ausgebreiteten (ungefalteten) Zustand im Wesentlichen L-förmigen Gassack handeln, dessen beide Schenkel jeweils einen der Gassackabschnitte bilden, der zur Erzeugung je einer Rollfaltung aufzurollen ist. Dabei erfolgt das Aufrollen der durch je einen Schenkel des L-förmigen Gassackzuschnittes gebildeten Gassackabschnitte entlang der Erstreckungsrichtung des jeweiligen Schenkels; gegebenenfalls so weit, dass die beiden durch Aufrollen der Schenkel gebildeten Rollfaltungen einander in einem Übergangsbereich überlappen.

Ferner kann der erfindungsgemäß gefaltete Gassack als ein Einkammer- oder als ein Mehrkammergassack ausgebildet sein, im letztgenannten Fall beispielsweise bestehend aus einer Kopf- und/oder Thorax- und/oder Pelvis-Kammer oder einer sonstigen Kombination mehrerer (mindestens zweier) Kammern. Im Fall eines Mehrkammergassackes können in eine jeweilige Rollfaltung Gassackbereiche einer oder mehrerer Kammern eingerollt sein.

Sofern es sich bei dem Gassack um einen so genannten Kopf-Thorax-Gassack handelt (der selbstverständlich auch zusätzlich dem Schutz des Pelvis dienen kann), können beispielsweise ein dem Kopfschutz dienender Gassackabschnitt einerseits sowie ein dem Schutz des Oberkörpers (Thorax/Pelvis) dienender Gassackabschnitt andererseits unter Bildung je einer Rollfaltung entlang je einer Raumrichtung aufgerollt werden, wobei anschließend noch eine zusätzliche, dritte Rollfaltung erzeugt werden kann, die die beiden(bereits zuvor aufgerollten) Gassackabschnitte umfasst und wobei insbesondere vorgesehen sein kann, dass (entlang einer bestimmten Raumrichtung der dritten Rollfaltung) zunächst der dem Kopfschutz dienende Gassackabschnitt und sodann der dem Schutz des Oberkörpers eines Insassen dienende Gassackabschnitt entlang der besagten dritten Raumrichtung zur Bildung der dritten Rollfaltung aufgerollt wird.

Weiterhin kann die erfindungsgemäße Rollfaltung auch zur Faltung nur eines Teiles eines zu faltenden Gassackes verwendet werden, während übrige Bereiche des Gassackes auf andere Weise gefaltet sind. Es soll also lediglich darauf ankommen, dass der Gassack im gefalteten Zustand mindestens zwei Rollfaltungen aufweist, die entlang winklig zueinander erstreckter Raumrichtungen aufgerollt worden sind; darüber hinaus kann der Gassack aber auch noch sonstige Faltungen aufweisen.

Ein Verfahren, das zur Faltung des erfindungsgemäßen Gassackes verwendet werden kann, ist durch die Merkmale des Anspruchs 12 charakterisiert.

Weiterbildungen dieses Verfahrens sind in den hiervon abhängigen Ansprüchen angegeben.

Weitere Einzelheiten und Vorteile der Erfindung werden bei der nachfolgenden Beschreibung von Ausführungsbeispielen anhand der Figuren deutlich werden.

Es zeigen:
- Fig. 1a: einen flach ausgebreiteten, L-förmigen Gassack bei Bildung einer ersten Rollfaltung;
- Fig. 1b: den Gassack aus Figur 1 a bei Bildung einer zweiten Rollfaltung;
- Fig. 1c: den Gassack aus den Figuren 1a und 1b nach Abschluss beider Rollfaltungen;
- Fig. 2a bis 2f: ein zweites Ausführungsbeispiel zur Bildung mehrerer Rollfaltungen an einem L-förmigen Gassackzuschnitt;
- Fig. 3: einen aus drei Rollfaltungen resultierenden gefalteten Gassack;
- Fig. 4a bis 4d: mehrere Schritte bei der Faltung eines Gassackzuschnittes mittels dreier Rollfaltungen;
- Fig. 5a bis 5m: ein weiteres Ausführungsbeispiel für eine Mehrzahl Faltschritte bei der Faltung eines Gassackzuschnittes mittels dreier Rollfaltungen.

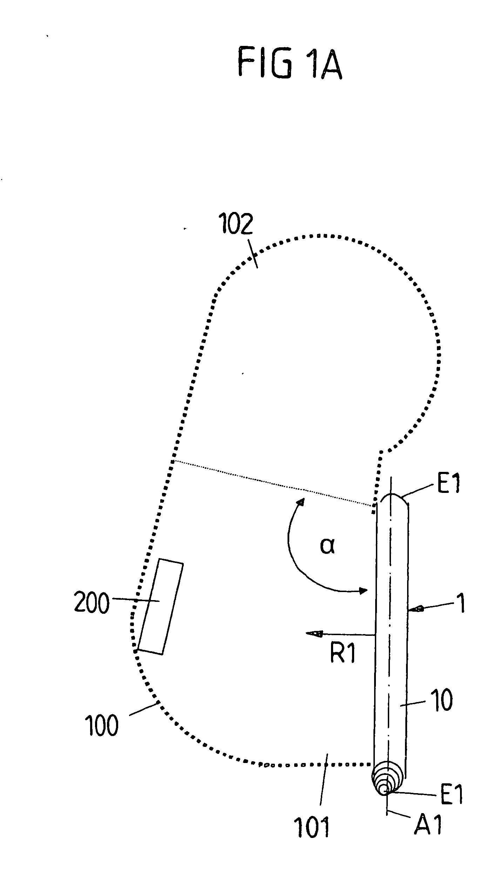

Figur 1a zeigt einen Gassack 100 für ein Airbagmodul, der in einem Crash-Fall mittels eines vorliegend im Gassack 100 angeordneten Gasgenerators 200 aufgeblasen werden kann, in einem flach ausgebreiteten Zustand, in dem der Gassack 100 eine im Wesentlichen L-förmige Gestalt mit einem ersten Schenkel 101 und einem zweiten Schenkel 102 aufweist.

Dabei wird der durch den ersten Schenkel des Gassackes gebildete Gassackabschnitt 11 entlang einer ersten Raumrichtung R1 (Rollrichtung), die im Wesentlichen mit der Erstreckungsrichtung des durch jenen Schenkel gebildeten Gassackabschnittes 101 zusammenfällt, aufgerollt, so dass eine erste Rollfaltung 1 des Gassackes 100 gebildet wird, die sich entlang einer Rollfaltungsachse A1 zwischen zwei Enden E1 erstreckt. Die Rollfaltungsachse A1 verläuft im Wesentlichen quer zu der Raumrichtung R1, entlang der der erste Gassackabschnitt 101 zur Bildung der Rollfaltung 1 aufgerollt worden ist und gibt die Längserstreckungsrichtung der ersten Rollfaltung 1 zwischen ihren beiden Enden E1 an.

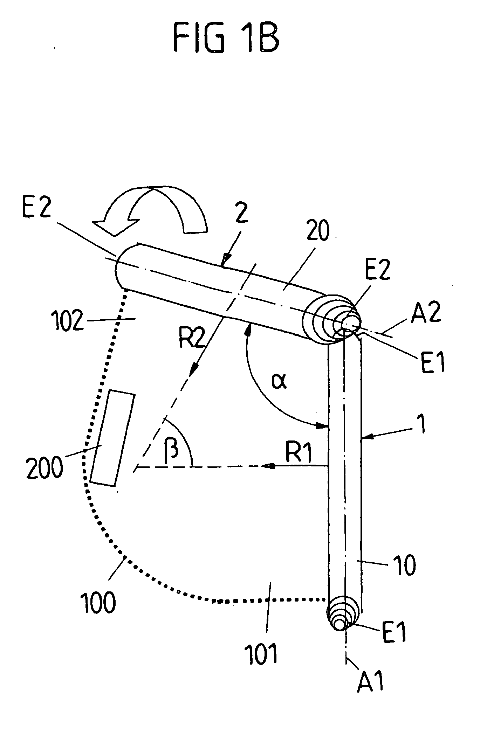

Gemäß Figur 1b wird anschließend der durch den zweiten Schenkel des L-förmigen Gassackzuschnittes gebildete zweite Gassackabschnitt 102 entlang einer zweiten Raumrichtung R2 (Rollrichtung) zur Bildung einer zweiten Rollfaltung 2 aufgerollt, wobei die zweite Raumrichtung R2 im Wesentlichen senkrecht (unter einem Winkel β von etwas weniger als 90°) zur ersten Raumrichtung R1 verläuft. Dies bedeutet, dass der Winkel α zwischen den Rollfaltungsachsen A1, A2 der beiden Rollfaltungen 1, 2 ein im Wesentlichen senkrechter Winkel ist, vorliegend geringfügig mehr als 90° beträgt.

Die durch Aufrollen des zweiten Gassackabschnittes 102 entlang einer zweiten Raumrichtung R2 gebildete zweite Rollfaltung 2 erstreckt sich dabei entlang einer Rollfaltungsachse A2 länglich zwischen zwei Enden E2.

Da die Rollfaltungsachsen A1, A2 der beiden Rollfaltungen 1, 2 senkrecht zu den Raumrichtungen R1, R2 verlaufen, entlang derer jeweils ein Gassackabschnitt 101, 102 zur Bildung der jeweiligen Rollfaltung 1, 2 aufgerollt worden ist, gilt für den Winkel β, unter dem sich die beiden Raumrichtungen R1, R2 schneiden: β = 180° - α. Anders ausgedrückt beträgt die Summe des Winkels α, unter dem sich die beiden Rollfaltungsachsen A1, A2 schneiden, und des Winkels β, unter dem sich die beiden Raumrichtungen R1, R2 schneiden, 180°.

In dem in Figur 1b gezeigten Zustand, in dem die durch die beiden Schenkel des L-förmigen Gassackzuschnittes gebildeten Gassackabschnitte 101, 102 jeweils zur Bildung je einer Rollfaltung aufgerollt worden sind, bis die beiden Rollfaltungen 1, 2 an benachbarten Enden E1, E2 nahezu aneinander stoßen, wird jede der Rollfaltungen 1, 2 durch eine Mehrzahl die jeweilige Rollfaltungsachse A1, A2 umgebender Faltlagen 10, 20 gebildet.

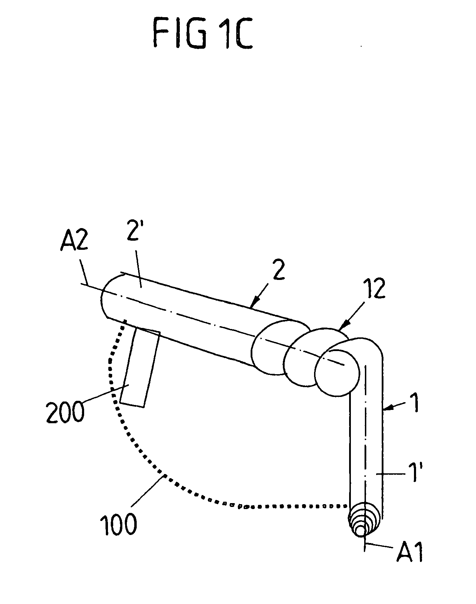

Wird nun, wie in Figur 1c dargestellt, die zweite Rollfaltung 2 durch weiteres Aufrollen des zugeordneten Gassackabschnittes 102 so erweitert, dass ein Teil der ersten Rollfaltung 1 entlang der zweiten Raumrichtung R2 mit aufgerollt und hierdurch in die zweite Rollfaltung 2 integriert wird, so entsteht eine resultierende Faltung, die einen Überlappungsbereich 12 zwischen den beiden Rollfaltungen 1, 2 umfasst.

Dieser Überlappungsbereich 12 ist dadurch gebildet, dass der zweite Gassackabschnitt, durch dessen Aufrollen die zweite Rollfaltung 2 gebildet worden ist, einen Teil der gemäß Figur 1a zuvor hergestellten ersten Rollfaltung 1 umfasste. Hierdurch ist ein Teil der ersten Rollfaltung 1 bei Bildung der zweiten Rollfaltung 2 mit aufgerollt und in die zweite Rollfaltung 2 integriert worden, was den Übergangs- bzw. Überlappungsbereich 12 zwischen erster und zweiter Rollfaltung 1, 2 erzeugt. An den Überlappungsbereich 12 schließt sich jeweils ein Faltbereich 1' bzw. 2' der resultierenden Faltung an, in dem die erste Rollfaltung 1 und zweite Rollfaltung 2 jeweils in reiner Form, also ohne Überlappung mit der jeweils anderen Rollfaltung 2, 1 vorliegt. Dabei strecken sich der Faltbereich 2', in dem die zweite Rollfaltung 2 in reiner Form vorliegt, sowie der Überlappungsbereich 12, in dem die beiden Rollfaltungen 1, 2 überlappen, entlang einer gemeinsamen Rollfaltungsachse A2, von der der Faltbereich 1', in dem die erste Rollfaltung 1 in reiner Form vorliegt, entlang der ersten Rollfaltungsachse A1 abgewinkelt ist.

Das Aufrollen des jeweiligen Gassackabschnittes 101, 102 in Form je eines Schenkels des Gassackes 100 entlang einer jeweiligen Raumrichtung R1 bzw. R2 um eine zugeordnete Rollfaltungsachse A1, A2 kann vorteilhaft in der Weise erfolgen, dass der jeweilige Gassackabschnitt 101, 102 z.B. mindestens dreimal, insbesondere mindestens fünfmal um jeweils 360° aufgerollt wird, wobei jedes einzelne Aufrollen um 360° zur Bildung eines im Querschnitt annähernd ringförmigen Gassackbereiches führt, der sich über einen Winkel von 360° erstreckt und der im Querschnitt einen Teil einer Spirla bildet. Ein fünfmaliges Aufrollen eines Gassackabschnittes führt dementsprechend - bei einer Querschnittsbetrachtung - im entsprechenden Gassackabschnitt zu fünf (offenen) Ringen, die gemeinsam eine Spiral bilden, wie sie beispielsweise in Figur 1b an je einem Ende E1, E2 der dortigen Rollfaltungen 1, 2 erkennbar ist.

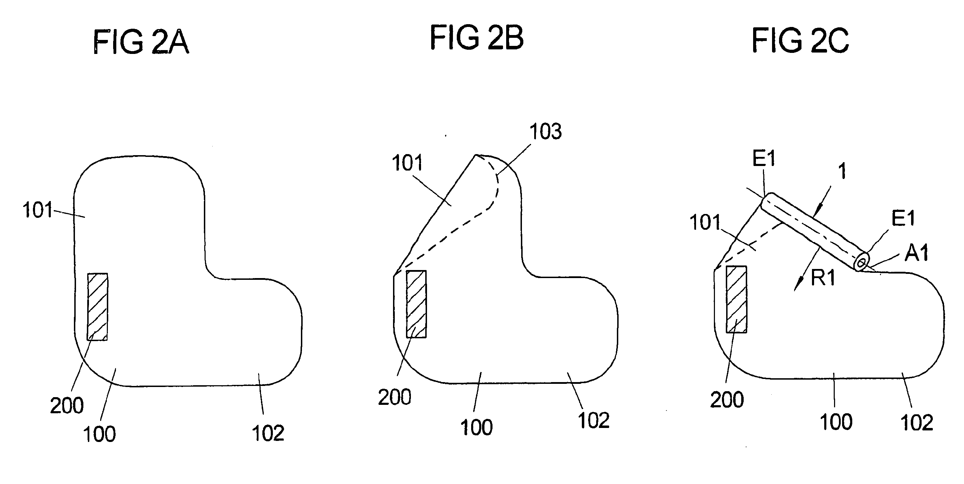

In den Figuren 2a bis 2f ist eine Abwandlung des Ausführungsbeispieles aus den Figuren 1a bis 1c dargestellt, wobei auch hier gemäß Figur 2a Ausgangspunkt ein Gassack 100 mit einem im flach ausgebreiteten Zustand L-förmigen Gassackzuschnitt ist, der einen ersten Schenkel 101 und einen zweiten Schenkel 102 aufweist und in seinem Inneren mit einem Gasgenerator 200 zum Aufblasen des Gassackes 100 versehen ist.

Gemäß Figur 2b wird jedoch vor Bildung der Rollfaltung der den ersten Schenkel bildende erste Gassackabschnitt 101 des Gassackes 100 unter Bildung einer Falte 103 einmal umgelegt, so dass sich der erste Gassackabschnitt 101 an einer Kante nun nicht mehr senkrecht sondern schräg zum zweiten Gassackabschnitt 102 erstreckt.

Gemäß Figur 2c wird der erste Gassackabschnitt 101 dann entlang einer ersten Raumrichtung R1 zur Bildung einer ersten Rollfaltung 1 aufgerollt, wobei die erste Rollfaltung R1 im Wesentlichen entlang der Erstreckungsrichtung der Kante des ersten Gassackabschnittes 101 verläuft, die sich nach Bildung der vorstehend erwähnten Falte 103 geneigt (schräg) zum zweiten Gassackabschnitt 102 erstreckt.

Im Ergebnis wird eine erste Rollfaltung R1 gebildet, die sich zwischen zwei freien Enden E1 entlang einer Rollfaltungsachse A1 erstreckt, und zwar im Wesentlichen senkrecht zur ersten Raumrichtung R1, entlang der der erste Gassackabschnitt 101 zur Bildung der ersten Rollfaltung 1 aufgerollt worden ist.

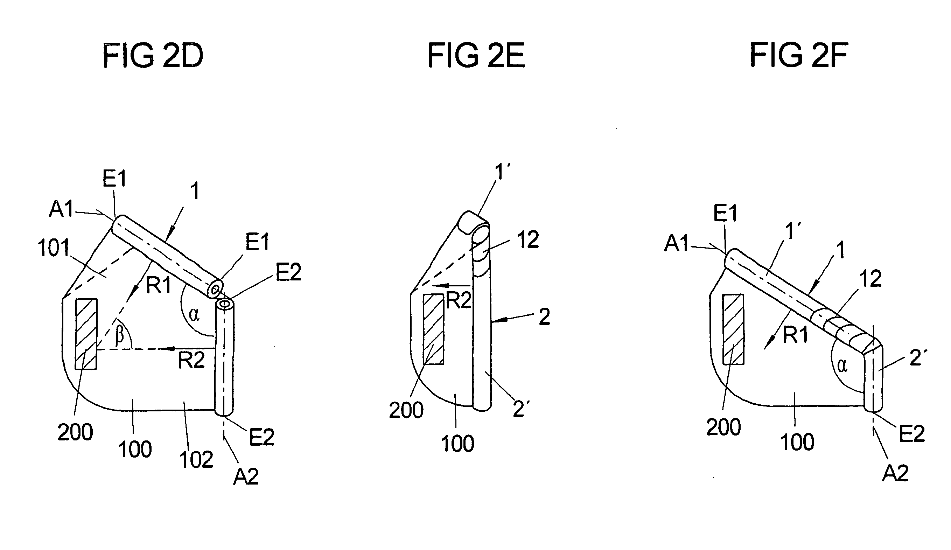

Anschließend wird der den zweiten Schenkel des L-förmigen Gassackzuschnittes bildende zweite Gassackabschnitt 102 gemäß Figur 2d zur Bildung einer zweiten Rollfaltung 2 entlang einer zweiten Raumrichtung R2 aufgerollt, die entlang der Erstreckungsrichtung des den zweiten Gassackabschnitt 102 bildenden Schenkels des L-förmigen Gassackzuschnittes verläuft.

Die resultierende zweite Rollfaltung 2 erstreckt sich zwischen zwei freien Enden E2 entlang einer zweiten Rollfaltungsachse A2, die unter einem Winkel α von mehr als 90° bezüglich der ersten Rollfaltungsachse A1 verläuft. Dies ist darauf zurückzuführen, dass wegen des geneigten Verlaufes der ersten Raumrichtung R1 zur Erstreckungsrichtung des zweiten Gassackabschnittes 102 und damit auch zur zweiten Raumrichtung R2, die Raumrichtungen R1, R2, entlang der die beiden Gassackabschnitte 101, 102 zur Bildung der Rollfaltungen 1, 2 aufgerollt worden sind, unter einem Winkel β von spürbar weniger als 90° zueinander orientiert sind.

Gemäß Figur 2e wird der zweite Gassackabschnitt 102 noch weiter aufgerollt, so dass die zweite Rollfaltung 2 mit der ersten Rollfaltung 1 unter Bildung eines Überlappungsbereiches 12 überlappt. Mit anderen Worten ausgedrückt wird der zweite Gassackabschnitt 102 zur Bildung der zweiten Rollfaltung 2 soweit aufgerollt, dass ein Teil der ersten Rollfaltung 1 entlang der zweiten Raumrichtung R2 mit aufgerollt wird und somit ein Teil der ersten Rollfaltung 1 unter Bildung des Überlappungsbereiches 12 in die zweite Rollfaltung 2 integriert ist.

Vorliegend wird dabei der zweite Gassackabschnitt 102 entlang der zweiten Raumrichtung R2 soweit aufgerollt, dass als verbleibender reiner Faltbereich 1' der ersten Rollfaltung 1 lediglich ein kleiner Teil der ersten Rollfaltung 1 verbleibt, während der größere Teil der ersten Rollfaltung 1 zunächst in die zweite Rollfaltung 2 bzw. genauer den Überlappungsbereich 12 integriert ist.

Anschließend wird gemäß Figur 2f die erste Rollfaltung 1 nochmals entlang der ersten Raumrichtung R1 aufgerollt, so dass der Überlappungsbereich 12 vergrößert wird, indem nun ein Teil des reinen Faltbereichs 2' der zweiten Rollfaltung 2 in die erste Rollfaltung 1 integriert wird. Gleichzeitig wird hierdurch auch der reine Faltbereich 1' der ersten Rollfaltung 1 wieder vergrößert.

Die in Figur 2f erkennbare resultierende Faltung des Gassackes 100 umfasst somit einen Übergangs- bzw. Überlappungsbereich 12, von dem ein reiner Faltbereich 1' der ersten Rollfaltung 1 sowie ein reiner Faltbereich 2' der zweiten Rollfaltung 2 abstehen, wobei sich der reine Faltbereich 1' der ersten Rollfaltung 1 zusammen mit dem Übergangs- und Überlappungsbereich 12 entlang einer ersten Faltungsachse A1 erstreckt und der reine Faltungsbereich 2' der zweiten Rollfaltung 2 entlang einer Rollfaltungsachse A2 von dem Überlappungsbereich 12 unter Bildung des bereits weiter oben erwähnten Winkels α abgewinkelt ist.

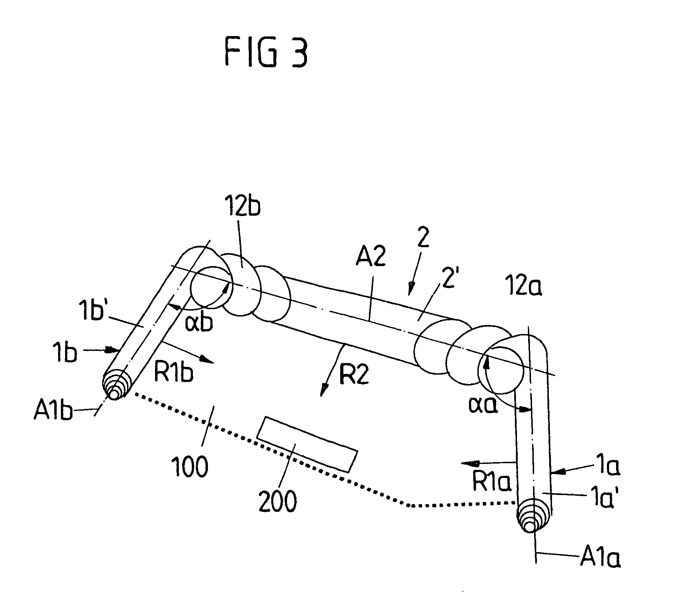

Figur 3 zeigt eine Abwandlung der Anordnungen aus den Figuren 1a bis 1c und 2a bis 2f, gemäß der zwei erste Rollfaltungen 1a, 1b vorgesehen sind, die durch Aufrollen je eines Abschnittes des Gassackes 100 entlang zueinander im Wesentlichen entgegengesetzter und nur leicht zueinander geneigter Raumrichtungen R1a, R1b gebildet worden sind und die sich jeweils entlang einer Rollfaltungsachse A1a, A1b erstrecken.

Jede dieser beiden ersten Rollfaltungen 1a, 1b ist in einem Übergangs- bzw. Überlappungsbereich 12a bzw. 12b Bestandteil einer zweiten Rollfaltung 2, die durch Aufrollen eines weiteren Gassackabschnittes entlang einer weiteren Raumrichtung R2 gebildet worden ist und die sich entlang einer zweiten Rollfaltungsachse A2 erstreckt.

Die zweite Raumrichtung R2, entlang der die zweite Rollfaltung 2 aufgerollt ist, erstreckt sich im Wesentlichen senkrecht zu den beiden ersten Raumrichtungen R1a, R1b, entlang derer die beiden ersten Rollfaltungen 1a, 1b aufgerollt worden sind, so dass dementsprechend auch die Winkel αa und αb zwischen jeder der ersten Rollfaltungsachsen A1a, A1b und der zweiten Rollfaltungsachse A2 im Wesentlichen 90° betragen.

Die resultierende Faltung weist somit gemäß Figur 3 einen zentralen Abschnitt auf, der durch einen reinen Faltbereich 2' der zweiten Rollfaltung 2 gebildet wird und an den sich entlang der zweiten Rollfaltungsachse A2 an jeder der beiden Stirnseiten jeweils einer der Überlappungsbereiche 12a, 12b zu jeweils einer der ersten Rollfaltungen 1a, 1b anschließt. Die beiden ersten Rollfaltungen 1a, 1b sind mit ihrem jeweiligen reinen Faltbereich 1a', 1b' unter dem jeweilige, oben angegebenen Winkel αa, αb von der zweiten Rollfaltung 2 abgewinkelt.

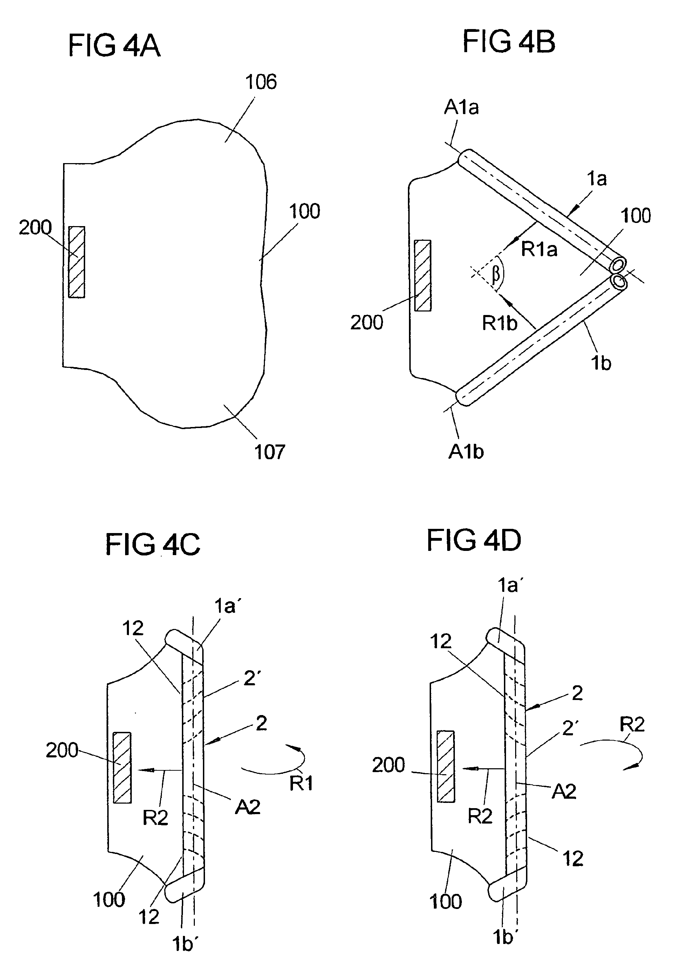

In den Figuren 4a bis 4d sind Schritte zur Herstellung einer dem gefalteten Gassack aus Figur 3 ähnlichen Anordnung gezeigt.

Ausgangspunkt ist gemäß Figur 4a ein Gassack 100 mit einem darin angeordneten Gasgenerator 200 zum Aufblasen des Gassackes, der zwei randseitige Gassackabschnitte 106, 107 aufweist, welche gemäß Figur 4b entlang jeweils einer von zwei zueinander im Wesentlichen senkrechten Raumrichtungen R1a, R1b zur Bildung je einer ersten Rollfaltung 1a, 1b aufgerollt werden.

Die gemäß Figur 4b zunächst resultierenden ersten Rollfaltungen 1 a, 1b weisen - als Folge der zueinander senkrechten Raumrichtungen R1a, R1b beim Faltvorgang - senkrecht zueinander erstreckte Rollfaltungsachsen A1a, A1b auf, wobei die beiden ersten Rollfaltungen 1a, 1b unter einem Winkel von etwa 90° aufeinander zu laufen und benachbarte freie Enden aufweisen.

Anschließend wird der Gassack 100 gemäß Figur 4c oder gemäß Figur 4d ausgehend von der Stelle, an der die beiden ersten Rollfaltungen 1a, 1b unter einem Winkel von etwa 90° so aufeinander zulaufen, dass sie benachbarte freie Enden bilden, entlang einer zweiten Raumrichtung R2 zur Schaffung einer zweiten Rollfaltung 2 aufgerollt, wobei die zweite Raumrichtung R2 in etwa die Winkelhalbierende des (rechten) Winkels β bidet, den die beiden ersten Raumrichtungen R1a, R1b einschließen.

Der Unterschied zwischen dem Vorgehen nach Figur 4c und dem Vorgehen nach Figur 4d besteht dabei darin, dass im erstgenannten Fall der Gassack 100 zur Bildung der zweiten Rollfaltung 2 nach oben gerollt wird, d. h., dass die zweite Rollfaltung 2 vor derselben Seite des Gassackes gebildet wird, vor der auch die beiden ersten Rollfaltungen 1a, 1b liegen, während im zweit genannten Fall der Gassack 100 zur Bildung der zweiten Rollfaltung 2 nach unten aufgerollt wird, d. h., dass die zweite Rollfaltung 2 vor der Seite des Gassackes 100 gebildet wird, die den beiden ersten Rollfaltungen 1a, 1b abgewandt ist.

In beiden Fällen weist die resultierende Faltung gemäß Figur 4c bzw. 4d einen reinen Faltbereich 2' der zweiten Rollfaltung 2 auf, der entlang der zweiten Rollfaltungsachse A2 an jeder Stirnseite in einen Übergangs- bzw. Überlappungsbereich 12 übergeht, von dem jeweils ein reiner Faltbereich 1a' bzw. 1b' der beiden ersten Rollfaltungen 1a, 1b abgewinkelt ist.

Der reine Faltbereich 2' der zweiten Rollfaltung 2 ist dabei vorliegend im Vergleich zu den Überlappungsbereichen 12 der resultierenden Faltung sehr klein ausgebildet, da der Gassackabschnitt, durch dessen Aufrollen die zweite Rollfaltung 2 gebildet wird, im Wesentlichen vollständig von den nahezu aneinander anstoßenden ersten Rollfaltungen 1a, 1b durchmessen wird, wie anhand Figur 4b erkennbar.

Durch die vorstehend anhand der Figuren 1a bis 4d beschriebenen unterschiedlichen Winkellagen der einzelnen Rollfaltungen zueinander sowie durch den unterschiedlichen Grad der Überlappung der Rollfaltungen können einerseits bestimmte Entfaltungsrichtungen des Gassackes beim Aufblasen vorgegeben werden und andererseits auch unterschiedliche Entfaltungsgeschwindigkeiten.

Die bevorzugte Entfaltungsrichtung eines erfindungsgemäß gefalteten Gassackes hängt dabei vor allem davon ab, entlang welcher Richtung die zur Faltung des Gassackes gebildeten Rollfaltungen aufgerollt worden sind. Die Entfaltungsgeschwindigkeit hängt zudem wesentlich vom Grad der Überlappung der Rollfaltungen ab.

Bei hinreichender Überlappung mehrerer Rollfaltungen kann es genügen, nur eine dieser Rollfaltungen, z. B. bei dem in den Figuren 4a bis 4d gezeigten Ausführungsbeispiel die zweite Rollfaltung (2) zu fixieren, da dann die weiteren Rollfaltungen (1 a, 1b) wegen der Überlappungsbereiche (12) mit in ihrer gefalteten Lage gehalten werden.

Das in den Figuren 4a bis 4d gezeigte Ausführungsbeispiel ist dabei insbesondere - neben dem Einsatz als Bestandteil eines Seitenairbagmodules - auch für Frontairbags (fahrer- oder beifahrerseitig) sowie für Knie- und Kopfairbagmodule anwendbar. Bei Anwendung des in den Figuren 4a bis 4d gezeigten Gassackes in einem Kopfairbagmodul, das beispielsweise am Dachkantenbereich eines Kraftfahrzeugs zu befestigen ist, kann es vorteilhaft sein, den in den Figuren 4a bis 4d dargestellten Gasgenerator 200 durch einen Gasgenerator mit angeschlossener, längserstreckter Gaslanze zu ersetzen.

Weiterhin kann es - je nach Anwendungsfall - zweckmäßig sein, den Gassack 100 - vor, während oder nach Erzeugung der Rollfaltungen - mit einer Einstülpung zu versehen, z. B. indem ein Teil eines der Gassackabschnitte 106, 107 nach innen umgestülpt wird, oder mit einer Faltenlage zu versehen, z. B. indem einer der Gassackabschnitte 106, 107 einmal umgeschlagen wird.

Grundsätzlich lassen sich die vorstehend beispielhaft beschriebenen Gassackfaltungen unter Verwendung mindestens zweier Rollfaltungen bei beliebigen Gassackformen einsetzen, wobei die Raumrichtungen und somit der Winkel der Rollfaltungsachsen zueinander ebenso wie das Verhältnis der einzelnen Rollenlängen entsprechend den Umständen im jeweiligen Einzelfall, insbesondere der gewünschten Entfaltungsrichtung und -geschwindigkeit gewährt wird.

Auch der Strömungswinkel des aus dem Gasgenerator in den Gassack eingelassenen Gases relativ zur räumlichen Orientierung der Rollfaltungen kann variabel gewählt werden, so dass sich eine definierte Aufblascharakteristik des jeweiligen Gassackes ergibt.

Für schmale Gassackpakete wird der Winkel α zwischen den Rollfaltungsachsen zweier Rollfaltungen bevorzugt so gewählt, dass die eine Rollfaltung (1) schraubenförmig in die zweite Rollfaltung (2) eingerollt wird, wie in Figur 1 dargestellt.

Zur Optimierung des Winkels α, unter dem die Rollfaltungsachsen zueinander orientiert sind oder auch aus sonstigen Gründen, kann ein jeweiliger Gassackabschnitt vor dem Einrollen zur Bildung einer Rollfaltung mit Stülpungen, Klappungen, Zickzackfalten oder dergleichen versehen werden, so dass diese in die jeweilige Rollfaltung mit eingefaltet werden.

Selbstverständlich können nach Erzeugung der vorstehend anhand von Ausführungsbeispielen beschriebenen Rollfaltungen noch weitere Faltschritte des Gassackes erfolgen, um diesen weiter zu kompaktieren bzw. in eine bestimmte, gewünschte Form zu bringen.

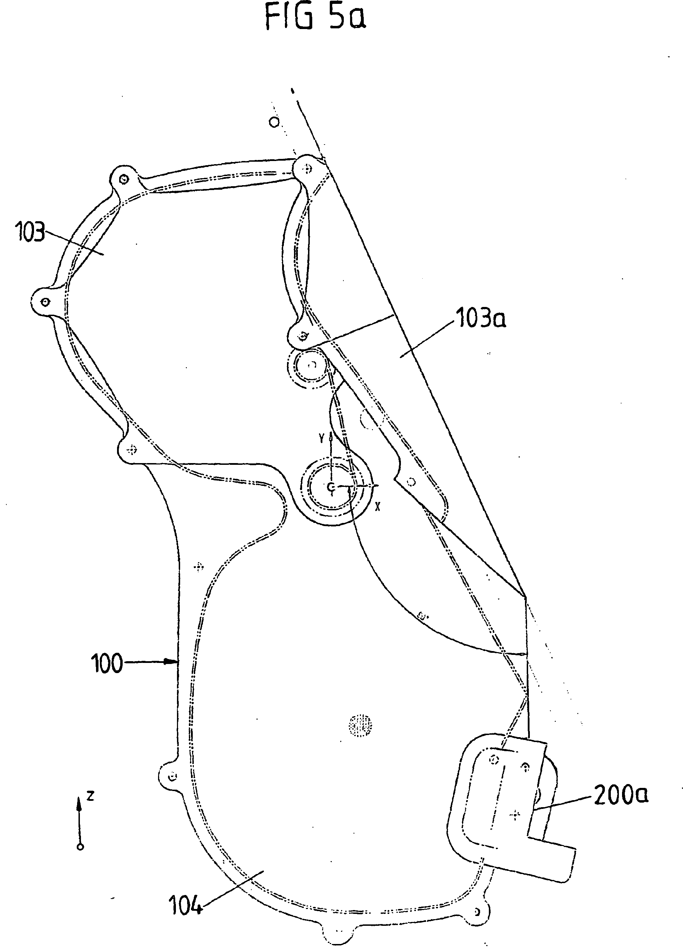

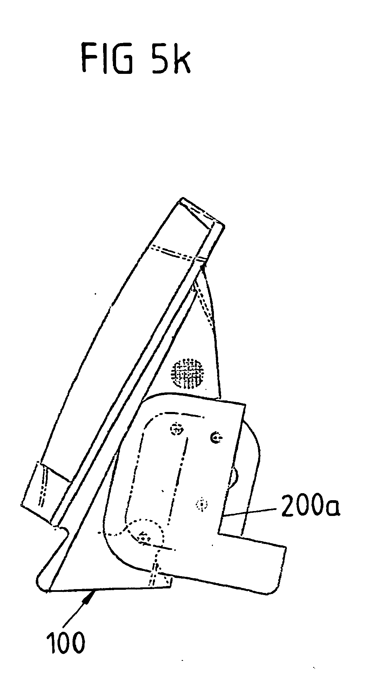

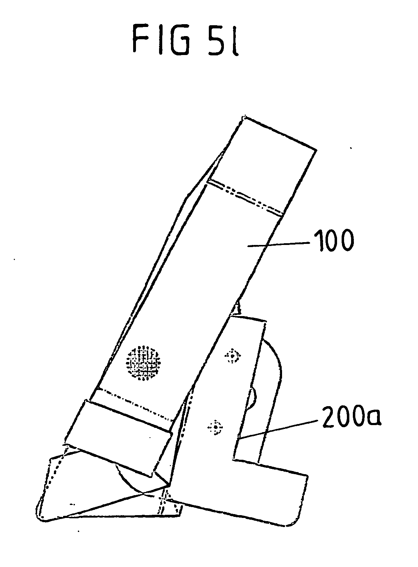

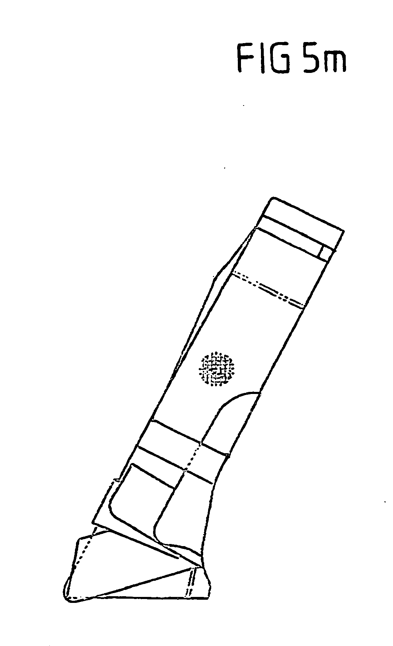

Derartige zusätzliche Faltschritte sind beispielsweise bei dem nachfolgend anhand der Figuren 5a bis 5m dargestellten Ausführungsbeispiel eines Faltvorganges für einen Mehrkammer-, hier konkret Zweikammer-Gassack 100 beschrieben.

Der Gassack 100 (in Form eines Kopf-Thorax-Gassack) weist zwei Gassackabschnitte 103, 104 auf, von denen der eine zur Bildung einer dem Kopfschutz dienenden Gassackkammer und der andere zur Bildung einer dem Schutz des Oberkörpers eines Insassen dienenden Gassackkammer vorgesehen ist.

Bezogen auf den in ein Kraftfahrzeug eingebauten Zustand des Gassackes 100 liegt der dem Kopfschutz dienende Gassackabschnitt 103, entlang der vertikalen Fahrzeugachse z betrachtet, oberhalb des dem Schutz des Oberkörpers eines Fahrzeuginsassen dienenden Gassackabschnittes 104, wenn der entsprechende Gassack 100 mit Gas befüllt ist.

Zunächst ist jedoch der Gassack 100 zusammen mit einem zugeordneten Gasgenerator in einem Kraftfahrzeugsitz zu verstauen, und zwar in einem kompaktiereten (zusammengefalteten) Zustand, unter Nutzung eines Faltprozesses der nachfolgend anhand der Figuren 5a bis 5m beschrieben werden wird.

Gemäß Figur 5a wird zunächst der erste (dem Kopfschutz dienende, obere) Gassackabschnitt 103 (zum Beispiel unter Verwendung eines Faltschwertes) in einem Teilbereich einmal umgeschlagen, so dass sich eine einzelne Faltenlage 103a im Gassack 100 bildet, vergleiche Figur 5a.

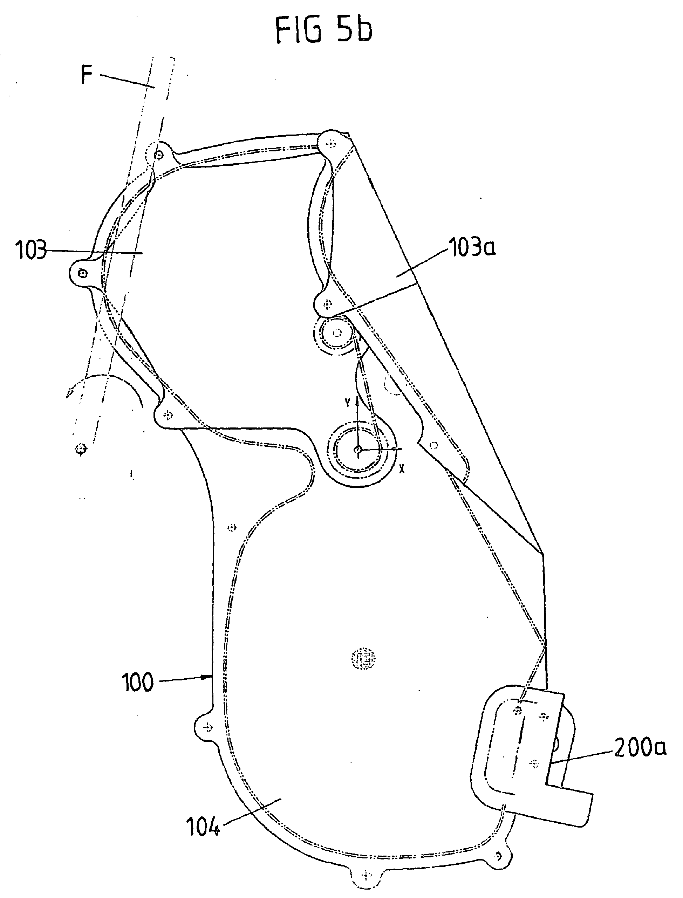

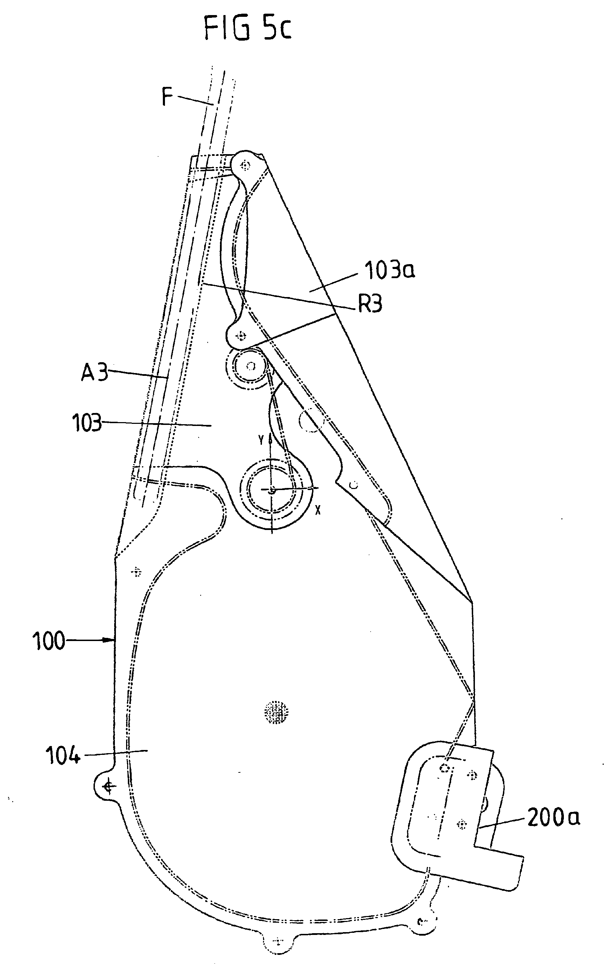

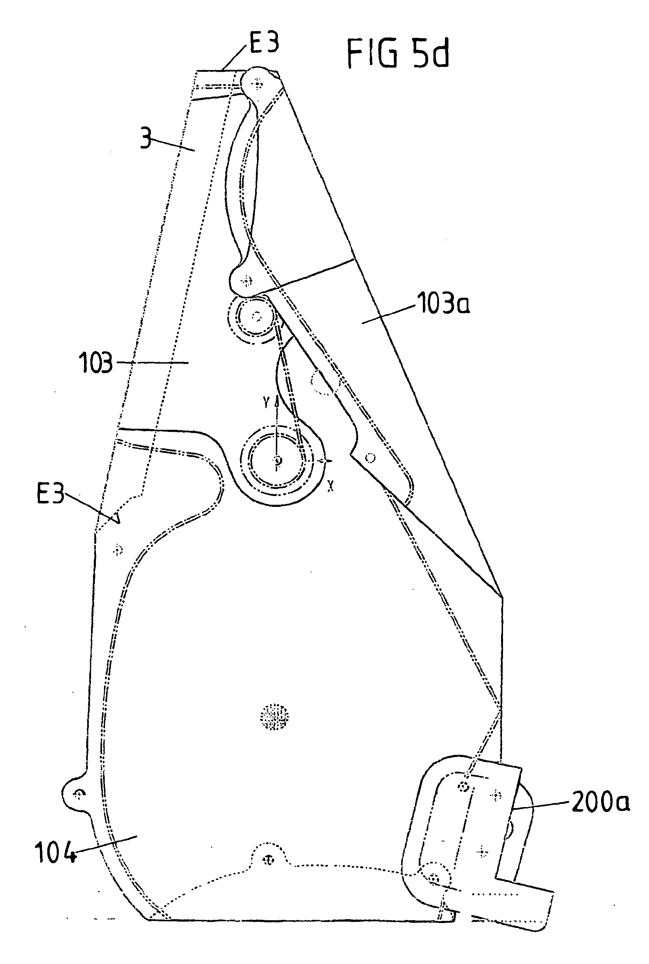

Gemäß den Figuren 5b und 5c wird anschließend an einem der besagten Falte 103a abgewandten Bereich des ersten Gassackabschnittes 103 ein längserstrecktes Faltschwert F angelegt und jener Gassackabschnitt 103 wird unter Drehung des Faltschwertes F um eine Längsachse A3 entlang einer Rollrichtung R3 aufgerollt, so dass sich in jenem ersten Gassackabschnitt 103 eine Rollfaltung 3 bildet. Die fertig aufgerollte Rollfaltung 3 erstreckt sich gemäß Figur 5d zwischen zwei Enden E3 mit einer leichten Neigung gegenüber der Vertikalen z, vergleiche Figur 5a.

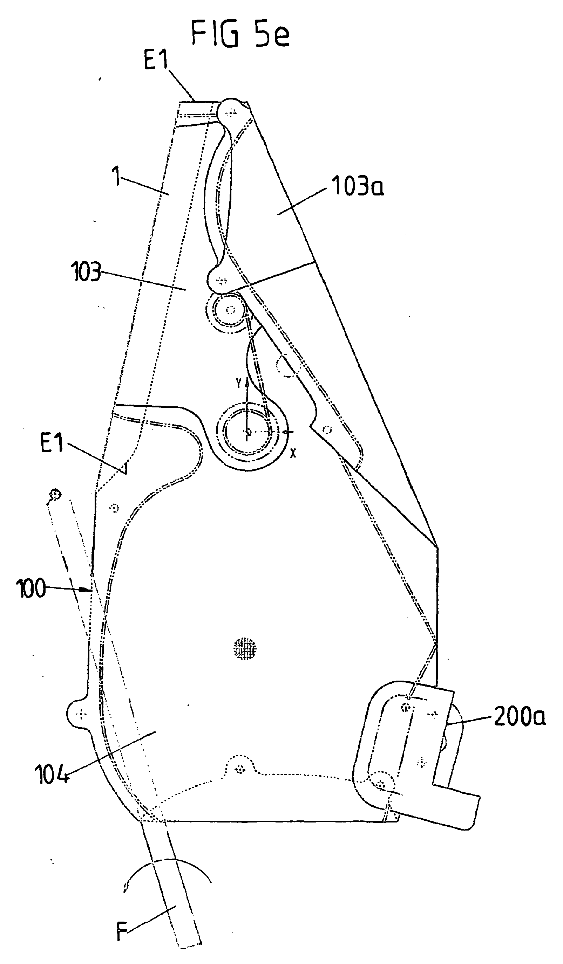

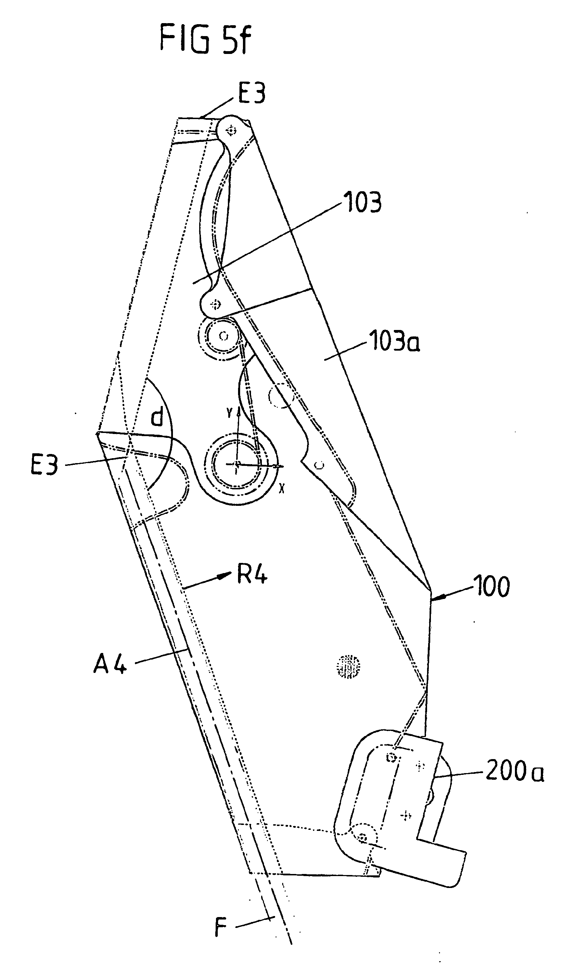

Sodann wird gemäß den Figuren 5e und 5f ein Faltschwert F an den zweiten (unteren, dem Schutz des Oberkörpers eines Fahrzeuginsassen dienenden) Gassackabschnitt 104 angelegt und der entsprechende Gassackabschnitt 104, dem auch ein Aufnahme- bzw. Verbindungsbereich 200a für einen Gasgenerator zugeordnet sein kann, durch Drehen des Faltschwertes F um eine Längsachse A4 entlang einer Rollrichtung R4 aufgerollt.

Jede volle Drehung des Faltschwertes F (um 360°) entspricht dabei einem einmaligen Aufrollen des entsprechenden Gassackabschnittes, so dass im Querschnitt ein annähernd ringförmiger Gassackbereich gebildet wird. Durch mehrfache vollständige Umdrehungen des Faltschwertes F lassen sich so in dem entsprechenden Gassackabschnitt annähernd konzentrische (offene) Ringe erzeugen, die eine Spirale bilden.

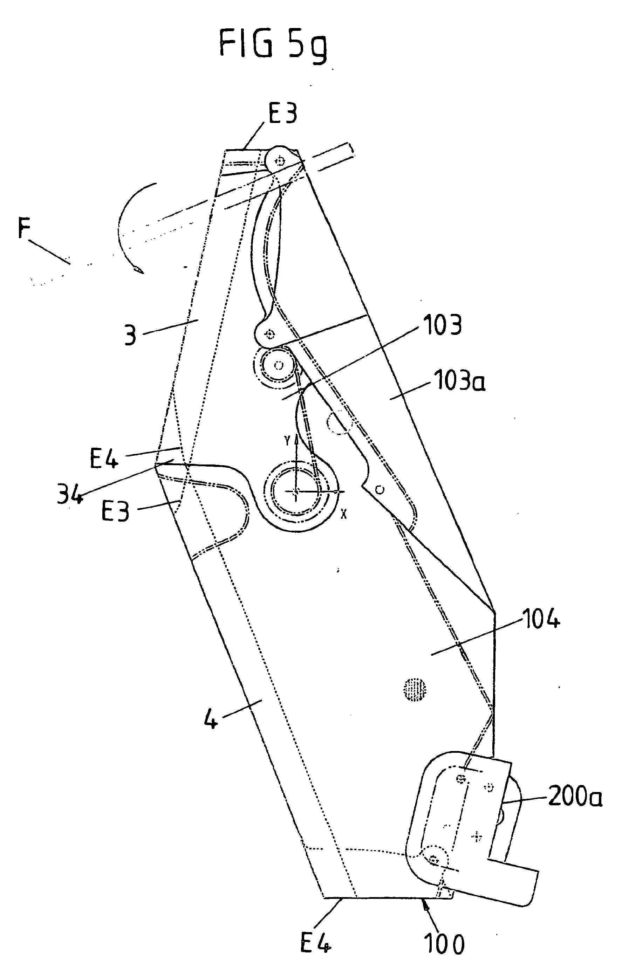

Wie insbesondere anhand Figur 5f und 5g deutlich wird, erstreckt sich auch die zweite Rollfaltung 104 zwischen zwei Enden E4, wobei die Erstreckungsrichtungen der beiden Rollfaltungen 3, 4 einen Winkel α von etwas weniger als 180° einschließen, also die Erstreckungsrichtungen der beiden Rollfaltungen 3, 4 (geringfügig) zueinander geneigt sind. Mit anderen Worten ausgedrückt, verlaufen die Erstreckungsrichtungen beider Rollfaltungen 3, 4 jeweils unter einem anderen, kleinen Winkel geneigt gegenüber der Vertikalen z, vergleiche Figur 5a. Außerdem überlappen die beiden Rollfaltungen 3, 4 an ihren einander zugewandten Enden E3, E4 in einem Überlappungsbereich 34.

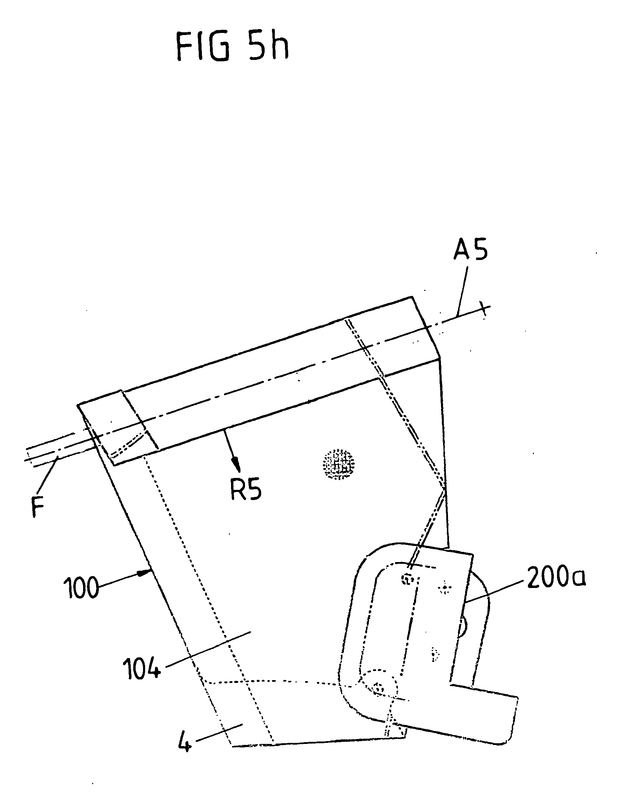

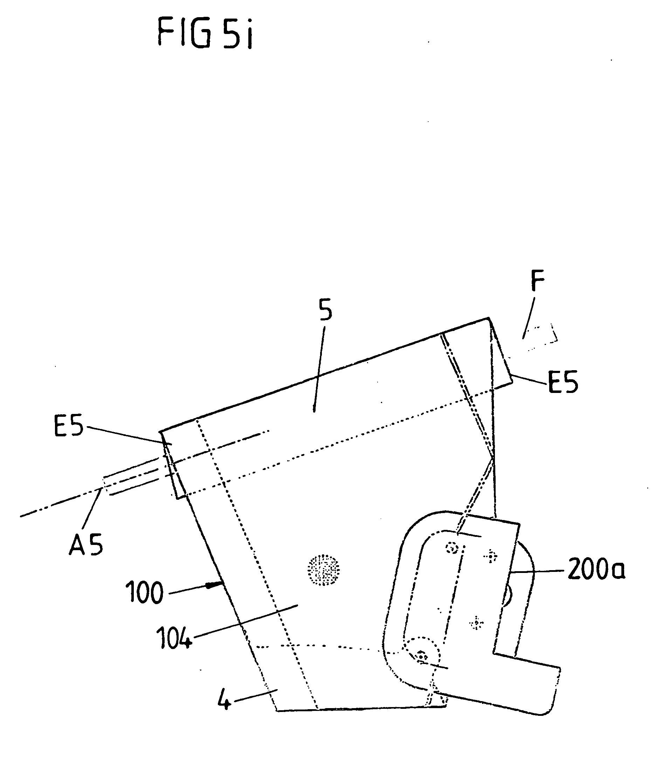

Nach Erzeugung der beiden einander (geringfügig) überlappenden Rollfaltungen 3, 4, die dem ersten bzw. zweiten Gassackabschnitt 103, 104 des Gassackes 100 zugeordnet sind, wird nun gemäß den Figuren 5g und 5h ein Faltschwert F am - entlang der Vertikalen z, vergleiche Figur 5a, betrachtet - oberen Ende des Gassackes 100, also an dessen (dem Kopfschutz dienenden) ersten Gassackabschnitt 103 platziert, das durch Drehen um eine Längsachse A5 entlang einer Rollrichtung R5 in Richtung auf den zweiten (unteren) Gassackabschnitt 104 aufgerollt wird, wobei die beiden zuvor gebildeten Rollfaltungen 3, 4 mit eingerollt werden und eine Stirnseite der sich bildenden dritten Rollfaltung 5 definieren, also an einem der Enden E5 der zuletzt aufgerollten Rollfaltung 5 liegen, vergleiche Figur 5i.

Dabei wird nur die erste Rollfaltung 3 vollständig in die zuletzt gebildete, dritte Rollfaltung 5 integriert, während die zweite Rollfaltung 4 nur teilweise in jene letzte Rollfaltung 5 eingerollt wird.

Die anhand der Figuren 5a ff. dargestellte Faltung unterscheidet sich somit von der anhand der Figuren 4a bis 4d erläuterten unter anderem darin, dass gemäß den Figuren 5a ff. die zuletzt gebildete, dritte Rollfaltung 5 (anders als die im Fall der Figuren 4a bis 4d zuletzt gebildete Rollfaltung 2) die beiden zuvor gebildeten Rollfaltungen (3, 4 im Fall der Figuren 5a ff.) nicht vollständig auf der ganzen Länge zwischen ihren beiden Enden E5 zwischen sich aufnimmt, sondern nur an einer Stirnseite im Bereich eines Endes E5. Die zuerst gebildeten Rollfaltungen 3, 4 bilden somit eine stirnseitige Begrenzung der zuletzt gebildeten Rollfaltung 5.

Wird ein entsprechend den Figuren 5a ff. gefertigter Gassack in einem Crash-Fall mit Gas befüllt, so entfaltet er sich zunächst durch Entrollen der zuletzt gebildeten Rollfaltung 5, wobei sich der Gassack 100 - bezogen auf den in ein Kraftfahrzeug eingebauten Zustand - entlang der vertikalen Fahrzeugachse z, vergleiche Figur 5a, entfaltet und ausdehnt. Anschließend erfolgt ein Entrollen der beiden zuerst gebildeten Rollfaltungen 3, 4, und zwar, bezogen auf den in ein Kraftfahrzeug eingebauten Zustand, im Wesentlichen entlang der Fahrzeuglängsachse. So kann durch die Abfolge der Auffaltvorgänge das Entfalten des Gassackes 100 beim Befüllen mit Gas gezielt gesteuert werden.

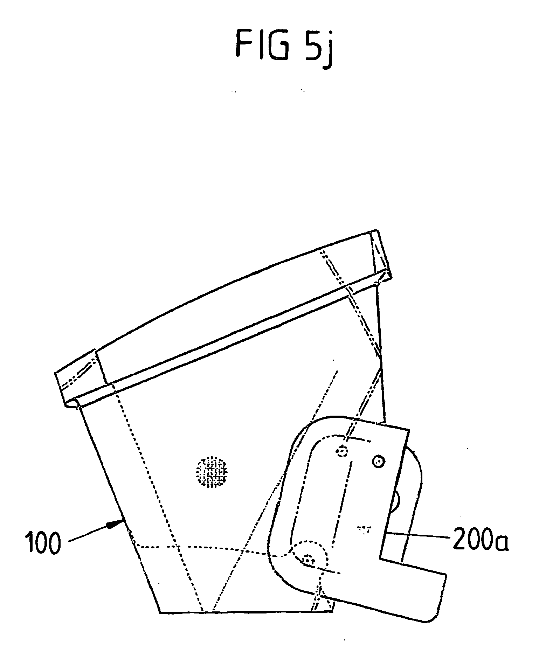

Gemäß den Figuren 5j bis 5m wird der Gassack 100 nach Abschluss der vorbeschriebenen Rollfaltvorgänge noch (mehrfach) umgeschlagen, um diesen in einen möglichst weitgehend kompakten Anlieferungszustand zu bringen, in dem er an einem Montagplatz verbracht wird, um ihn in ein Kraftfahrzeug, insbesondere in einen Kraftfahrzeugsitz, einzubauen.

## Patentansprüche

1. Gefalteter Gassack für ein Kraftfahrzeug, der in einem Crash-Fall aufblasbar ist, mit
- einer ersten Rollfaltung (1, 1a, 1b, 3), die durch Aufrollen eines ersten Gassackabschnittes (101, 103, 106, 107) erzeugt ist, und
- einer zweiten Rollfaltung (2, 4), die durch Aufrollen eines zweiten Gassackabschnittes (102, 104) erzeugt ist,
**dadurch gekennzeichnet,**
**dass** die Raumrichtungen (R1, R1a, R1b, R2, R3, R4, R5), entlang derer die beiden Gassackabschnitte (101, 102, 103, 104, 106, 107) zur Bildung je einer Rollfaltung (1, 1a, 1 b, 2, 3, 4, 5) aufgerollt sind, winklig zueinander orientiert sind.

2. Gefalteter Gassack nach Anspruch 1, **dadurch gekennzeichnet, dass** die beiden Raumrichtungen (R1, R1a, R1b, R2, R3, R4, R5) einander unter einem Winkel (β) zwischen 10° und 170° zueinander orientiert sind.

3. Gefalteter Gassack nach einem der vorhergehenden Ansprüche, **dadurch gekennzeichnet, dass** die beiden Rollfaltungen (1, 1a, 1b, 2, 3, 4, 5) einander überlappen.

4. Gefalteter Gassack nach Anspruch 3, **dadurch gekennzeichnet, dass** die beiden Rollfaltungen (1, 1a, 1b, 2, 3, 4, 5) einander derart überlappen, dass der zweite Gassackabschnitt (102, 104), durch dessen Aufrollen die zweite Rollfaltung (2, 4) erzeugt ist, die erste Rollfaltung (1, 1a, 1b, 3) zumindest teilweise umfasst.

5. Gefalteter Gassack nach Anspruch 3 oder 4, **dadurch gekennzeichnet, dass** beim Aufrollen des zweiten Gassackabschnittes (102, 104) zur Bildung der zweiten Rollfaltung (2, 4) zumindest ein Teil der ersten Rollfaltung (1, 1a, 1b, 3) entlang der zweiten Raumrichtung (R2, R4) mit aufgerollt ist.

6. Gefalteter Gassack nach einem der vorhergehenden Ansprüche, **dadurch gekennzeichnet, dass** die aus den beiden Rollfaltungen (1, 1a, 1b, 2, 3, 4, 5) resultierende Faltung einen ersten Faltbereich (12, 34) umfasst, in dem die beiden Rollfaltungen überlappen, sowie mindestens einen weiteren Faltbereich (1', 1a', 1b', 2'), der durch Bereiche genau einer der Rollfaltungen gebildet wird.

7. Gefalteter Gassack nach Anspruch 6, **dadurch gekennzeichnet, dass** zwei weitere Faltbereiche (1', 1a', 1b', 2') vorgesehen sind, die jeweils durch einen Bereich genau einer der Rollfaltungen (1, 1a, 1b, 2) gebildet werden.

8. Gefalteter Gassack nach einem der Ansprüche 3 bis 7, **dadurch gekennzeichnet, dass** zwei Rollfaltungen (1, 1a, 1b, 2, 3, 4, 5) derart vollständig überlappen, dass mindestens eine der Rollfaltungen keinen Bereich aufweist, der nicht mit einer anderen Rollfaltung überlappt.

9. Gefalteter Gassack nach Anspruch 8, **dadurch gekennzeichnet, dass** zwei Rollfaltungen (1, 1a, 1b, 2, 3, 4, 5) derart überlappen, dass keine der beiden Rollfaltungen einen Bereich aufweist, der nicht mit einer anderen Rollfaltung überlappt.

10. Gefalteter Gassack nach einem der vorhergehenden Ansprüche, **dadurch gekennzeichnet, dass** mehr als zwei Rollfaltungen (1, 1a, 1b, 2, 3, 4, 5) vorgesehen sind, von denen mindestens zwei entlang unterschiedlicher Raumrichtungen (R1, R1a, R1b, R2, R3, R4, R5) aufgerollt sind.

11. Gefalteter Gassack nach Anspruch 10, **dadurch gekennzeichnet, dass** sämtliche Rollfaltungen (1, 1a, 1b, 2, 3, 4, 5) jeweils entlang unterschiedlicher Raumrichtungen (R1, R1a, R1b, R2, R3, R4, R5) aufgerollt sind.

12. Verfahren zur Faltung eines Gassackes für ein Kraftfahrzeug, der in einem Crash-Fall aufgeblasen wird, wobei
a) durch Aufrollen eines ersten Gassackabschnittes (101, 103, 106, 107) eine erste Rollfaltung (1, 1a, 1b, 3) des Gassackes erzeugt wird und
b) durch Aufrollen eines zweiten Gassackabschnittes (102, 104) eine zweite Rollfaltung (2, 4) des Gassackes erzeugt wird,
insbesondere zur Herstellung eines gefalteten Gassackes nach einem der vorhergehenden Ansprüche,
**dadurch gekennzeichnet,**
**dass** die Raumrichtungen (R1, R1a, R1b, R2, R3, R4, R5), entlang derer die beiden Gassackabschnitte (101, 102, 103, 104, 106, 107) zur Bildung je einer Rollfaltung (1, 1a, 1b, 2, 3, 4, 5) aufgerollt werden, winklig zueinander orientiert sind.

13. Verfahren nach Anspruch 12, **gekennzeichnet durch** einen Winkel (β), unter dem die beiden Raumrichtungen (R1, R1a, R1b, R2, R3, R4, R5) zueinander orientiert sind, gemäß Anspruch 2.

14. Verfahren nach Anspruch 12 oder 13, **dadurch gekennzeichnet, dass** zumindest einer der beiden Gassackabschnitte (101, 102, 103, 104, 106, 107) zur Bildung einer Rollfaltung (1, 1a, 1b, 2, 3, 4, 5) soweit aufgerollt wird, dass die beiden Rollfaltungen (1, 1a, 1b, 2, 3, 4, 5) einander überlappen.

15. Verfahren nach einem der Ansprüche 12 bis 14, **gekennzeichnet durch** ein Überlappen der beiden Rollfaltungen gemäß einem der Ansprüche 4 bis 9.

## Claims

1. Folded airbag for a motor vehicle, which can be inflated in case of a crash having
- a first rolled folding (1, 1a, 1b, 3) created by rolling up a first airbag section (101, 103, 106, 107), and
- a second rolled folding (2, 4) created by rolling up a second airbag section (102, 104),
**characterized in that**
the spatial directions (R1, R1a, R1b, R2, R3, R4, R5), along which the two airbag sections (101, 102, 103, 104, 106, 107) are rolled up to form a rolled folding (1, 1a, 1b, 2, 3, 4, 5), are oriented at an angle to each other.

2. Folded airbag according to claim 1, **characterized in that** the two spatial directions (R1, R1a, R1b, R2, R3, R4, R5) are oriented to each other in an angle (β) between 10° and 170°.

3. Folded airbag according to any of the preceding claims, **characterized in that** the two rolled foldings (1, 1a, 1b, 2, 3, 4, 5) overlap each other.

4. Folded airbag according to claim 3, **characterized in that** the two rolled foldings (1, 1a, 1b, 2, 3, 4, 5) overlap each other in such a manner that the second airbag section (102, 104), which forms the second rolled folding (2, 4) by rolling up said section, comprises at least in part the first rolled folding (1, 1a, 1b, 3).

5. Folded airbag according to claim 3 or 4, **characterized in that** by rolling up the second airbag section (102, 104) for forming the second rolled folding (2, 4) at least one part of the first rolled folding (1, 1a, 1b, 3) is also rolled up along the second spatial direction (R2, R4).

6. Folded airbag according to any of the preceding claims, **characterized in that** the folding resulting from the two rolled foldings (1, 1a, 1b, 2, 3, 4, 5) comprises a first folded area (12, 34) in which both rolled foldings overlap and at least one further folded area (1', 1 a', 1b', 2') formed by areas of exactly one of the rolled foldings.

7. Folded airbag according to claim 6, **characterized in that** two further folded areas (1', 1a', 1b', 2') are provided each being formed by an area of exactly one of the rolled foldings (1, 1a, 1b, 2).

8. Folded airbag according to any of claims 3 to 7, **characterized in that** two rolled foldings (1, 1a, 1b, 2, 3, 4, 5) overlap completely in such a manner that at least one of the rolled foldings does not have any area which does not overlap with the other rolled folding.

9. Folded airbag according to claim 8, **characterized in that** two rolled foldings (1, 1a, 1b, 2, 3, 4, 5) overlap in such a manner that none of the two rolled foldings has an area which does not overlap with another rolled folding.

10. Folded airbag according to any of the preceding claims, **characterized in that** more than two rolled foldings (1, 1a, 1b, 2, 3, 4, 5) are provided of which at least two are rolled up along different spatial directions (R1, R1a, R1b, R2, R3, R4, R5).

11. Folded airbag according to claim 10, **characterized in that** all rolled foldings (1, 1 a, 1 b, 2, 3, 4, 5) are rolled up along different spatial directions (R1, R1a, R1b, R2, R3, R4, R5), respectively.

12. Method for folding an airbag of a motor vehicle, which is inflated in case of a crash, whereby
a) by rolling up of a first airbag section (101, 103, 106, 107) a first rolled folding (1, 1a, 1b, 3) of the airbag is created and
b) by rolling up of a second airbag section (102, 104) a second rolled folding (2, 4) of the airbag is created,
in particular for the production of a folded airbag according to any of the preceding claims,
**characterized in that**
the spatial directions (R1, R1a, R1 b, R2, R3, R4, R5), along which the two airbag sections (101, 102, 103, 104, 106, 107) are rolled up to form a rolled folding (1, 1a, 1b, 2, 3, 4, 5), are oriented at an angle to each other.

13. Method according to claim 12, **characterized by** an angle (β) by which the two spatial directions (R1, R1a, R1b, R2, R3, R4, R5) are oriented to each other according to claim 2.

14. Method according to claim 12 or 13, **characterized in that** at least one of the two airbag sections (101, 102, 103, 104, 106, 107) are rolled up for forming a rolled folding (1, 1a, 1b, 2, 3, 4, 5) to such an extend that the two rolled foldings (1, 1a, 1b, 2, 3, 4, 5) overlap each other.

15. Method according to any of claims 12 to 14, **characterized by** an overlapping of the two rolled foldings according to one of claims 4 to 9.

## Revendications

1. Sac à gaz plié pour véhicule automobile, gonflable en cas de collision, comprenant
- un premier pliage enroulé (1, 1a, 1b, 3) créé par l'enroulement d'une première portion de sac à gaz (101, 103, 106, 107), et
- un deuxième pliage enroulé (2, 4) créé par l'enroulement d'une deuxième portion de sac à gaz (102, 104),
**caractérisé en ce que**
les directions dans l'espace (R1, R1a, R1b, R2, R3, R4, R5), le long desquelles les deux portions de sac à gaz (101, 102, 103, 104, 106, 107) sont enroulées pour former respectivement un pliage enroulé (1, 1a, 1b, 2, 3, 4, 5), sont orientées sous un angle les unes par rapport aux autres.

2. Sac à gaz plié selon la revendication 1, **caractérisé en ce que** les deux directions dans l'espace (R1, R1a, R1b, R2, R3, R4, R5) sont orientées sous un angle (β) entre 10° et 170° l'une par rapport à l'autre.

3. Sac à gaz plié selon l'une quelconque des revendications précédentes, **caractérisé en ce que** les deux pliages enroulés (1, 1a, 1b, 2, 3, 4, 5) se recouvrent.

4. Sac à gaz plié selon la revendication 3, **caractérisé en ce que** les deux pliages enroulés (1, 1a, 1b, 2, 3, 4, 5) se recouvrent de telle sorte que la deuxième portion de sac à gaz (102, 104) dont l'enroulement crée le deuxième pliage enroulé (2, 4) comprend au moins en partie le premier pliage enroulé (1, 1a, 1b, 3).

5. Sac à gaz plié selon les revendications 3 ou 4, **caractérisé en ce que** lors de l'enroulement de la deuxième portion de sac à gaz (102, 104) pour former le deuxième pliage (2, 4) au moins une partie du premier pliage enroulé (1, 1a, 1b, 3) est également enroulée le long de la deuxième direction dans l'espace (R2, R4).

6. Sac à gaz plié selon l'une quelconque des revendications précédentes, **caractérisé en ce que** le pliage résultant des deux pliages enroulés (1, 1a, 1b, 2, 3, 4, 5) comprend une première zone de pliage (12, 34) dans laquelle les deux pliages enroulés se recouvrent, ainsi qu'au moins une autre zone de pliage (1', 1a', 1b', 2') qui est formée précisément par des zones d'un des deux pliages enroulés.

7. Sac à gaz plié selon la revendication 6, **caractérisé en ce que** deux autres zones de pliage (1', 1a', 1b', 2') sont prévues qui sont formées respectivement précisément par une zone d'un des pliages enroulés (1, 1a, 1b, 2).

8. Sac à gaz plié selon l'une quelconque des revendications 3 à 7, **caractérisé en ce que** deux pliages enroulés (1, 1a, 1b, 2, 3, 4, 5) se recouvrent complètement de telle sorte qu'au moins l'un des pliages enroulés ne présente aucune zone ne recouvrant pas un autre pliage enroulé.

9. Sac à gaz plié selon la revendication 8, **caractérisé en ce que** deux pliages enroulés (1, 1a, 1b, 2, 3, 4, 5) se recouvrent de telle sorte qu'aucun des deux pliages enroulés ne présente de zone ne recouvrant pas un autre pliage enroulé.

10. Sac à gaz plié selon l'une quelconque des revendications précédentes, **caractérisé en ce que** plus de deux pliages enroulés (1, 1a, 1b, 2, 3, 4, 5) sont prévus dont au moins deux sont enroulés le long de différentes directions dans l'espace (R1, R1a, R1b, R2, R3, R4, R5).

11. Sac à gaz plié selon la revendication 10, **caractérisé en ce que** tous les pliages enroulés (1, 1a, 1b, 2, 3, 4, 5) sont enroulés respectivement le long de directions dans l'espace différentes (R1, R1a, R1b, R2, R3, R4, R5).

12. Procédé de pliage d'un sac à gaz pour véhicule automobile qui se gonfle en cas de collision, dans lequel
a) l'enroulement d'une première portion de sac à gaz (101, 103, 106, 107) crée un premier pliage enroulé (1, 1a, 1b, 3) du sac à gaz, et
b) l'enroulement d'une deuxième portion de sac à gaz (102, 104) crée un deuxième pliage enroulé (2, 4) du sac à gaz,
en particulier pour la fabrication d'un sac à gaz plié selon l'une quelconque des revendications précédentes,
**caractérisé en ce que**
les directions dans l'espace (R1, R1a, R1b, R2, R3, R4, R5), le long desquelles les deux portions de sac à gaz (101, 102, 103, 104, 106, 107) sont enroulées pour former respectivement un pliage enroulé (1, 1a, 1b, 2, 3, 4, 5), sont orientées sous un angle les unes par rapport aux autres.

13. Procédé selon la revendication 12, **caractérisé par** un angle (β) sous lequel les deux directions dans l'espace (R1, R1a, R1b, R2, R3, R4, R5) sont orientées l'une par rapport à l'autre, selon la revendication 2.

14. Procédé selon les revendications 12 ou 13, **caractérisé en ce qu'**au moins l'une des deux portions de sac à gaz (101, 102, 103, 104, 106, 107) est enroulée pour former un pliage enroulé (1, 1a, 1b, 2, 3, 4, 5) de sorte que les deux pliages enroulés (1, 1a, 1b, 2, 3, 4, 5) se recouvrent.

15. Procédé selon l'une quelconque des revendications 12 à 14, **caractérisé par** un recouvrement des deux pliages enroulés selon l'une quelconque des revendications 4 à 9.
